# EUROPÄISCHE PATENTSCHRIFT

(11) **EP 4 031 786 B1**
(45) Veröffentlichungstag und Bekanntmachung des Hinweises auf die Patenterteilung: **06.05.2026**
(21) Anmeldenummer: 19769483.9
(22) Anmeldetag: 16.09.2019
(51) Int. Cl.: F16K 1/36, F01P 7/14, F16K 31/06, F16K 39/02, H01F 1/00

(54) **ELEKTROMAGNETVENTIL FÜR EIN KRAFTFAHRZEUG UND VERFAHREN ZUR HERSTELLUNG EINER BEWEGUNGSEINHEIT AUS EINEM ANKER UND EINER VENTILEINHEIT FÜR EIN DERARTIGES ELEKTROMAGNETVENTIL**
SOLENOID VALVE FOR A MOTOR VEHICLE AND METHOD FOR PRODUCING A MOVEMENT UNIT FROM AN ARMATURE AND A VALVE UNIT FOR A SOLENOID VALVE OF THIS KIND
ÉLECTROVANNE POUR VÉHICULE AUTOMOBILE ET PROCÉDÉ DE PRODUCTION D'UNE UNITÉ DÉPLACEMENT À PARTIR D'UNE ARMATURE ET UNITÉ VANNE POUR ÉLECTROVANNE DE CE TYPE

(43) Veröffentlichungstag der Anmeldung: 27.07.2022
(73) Patentinhaber: Pierburg GmbH, 41460 Neuss (DE)
(72) Erfinder: SADIKU, Besart, 41460 Neuss (DE); HERMANN, Max, 41460 Neuss (DE); SCHUMACHER, Julian, 41460 Neuss (DE); AYDAN, Sami, 41460 Neuss (DE); NIEBORG, Dominik, 41460 Neuss (DE)
(74) Vertreter: Eisenführ Speiser
(86) Internationale Anmeldenummer: PCT/EP2019/074719
(87) Internationale Veröffentlichungsnummer: WO 2021/052560

(56) Entgegenhaltungen:
- EP-A1- 1 717 501
- EP-A1- 3 263 962
- EP-A1- 3 372 809
- CN-A- 105 179 791
- DE-A1- 102011 056 096
- DE-A1- 102015 101 477
- GB-A- 2 334 552
- US-A- 4 783 044
- US-A- 5 961 052
- US-A1- 2013 134 339

## Beschreibung

Die Erfindung betrifft ein Elektromagnetventil für ein Kraftfahrzeug mit einem Gehäuse, das einen Einlass und einen Auslass aufweist, einem Durchströmungsquerschnitt, der zwischen dem Einlass und dem Auslass ausgebildet ist und von einem Ventilsitz umgeben ist, einer einstückigen Ventileinheit mit einem Koppelglied und einem Regelkörper, der auf den Ventilsitz absetzbar und vom Ventilsitz abhebbar ist und einem elektromagnetischen Aktor mit einem Anker, der eine axiale Durchgangsbohrung aufweist, in die das Koppelglied der Ventileinheit ragt, die mit dem Anker bewegbar ist, sowie ein Verfahren zur Herstellung einer Bewegungseinheit aus einem Anker und einer Ventileinheit für ein derartiges Elektromagnetventil.

Derartige Elektromagnetventile können vielfältig verwendet werden. Zu nennen ist insbesondere deren Verwendung als Kühlmittelventil zum Absperren oder Freigeben eines Kühlmittelflusses in einem Kühlkreislauf eines Kraftfahrzeugs. Ein derartiges elektromagnetisches Kühlmittelventil weist üblicherweise einen Regelkörper aus einem Kunststoff auf, der mit einem magnetisierbaren und üblicherweise aus einem Metall hergestellten Anker verbunden werden muss, um eine Bewegungskopplung zu erhalten, die dazu führt, dass der Regelkörper durch Bestromung des Elektromagneten auf einen Ventilsitz abgesetzt werden kann oder von diesem abgehoben werden kann. Die Kopplung des Regelkörpers mit dem Anker kann über Koppelgliede und kraft- oder formschlüssige Verbindungen erfolgen, wobei das Material des Koppelgliedes entweder aus Metall oder aus Kunststoff sein kann. So ist es bekannt, den Regelkörper mit einem axialen Vorsprung auszuführen der mittels einer Pressverbindung in einer Bohrung des Ankers befestigt wird.

So wird beispielsweise in der DE 10 2012 010 140 A1 ein elektromagnetisches Schubumluftventil offenbart, bei dem der Verschlusskörper über eine Kugelkopfverbindung mit dem Anker verbunden ist. Zur Verringerung der Schaltzeiten weist dieses Ventil Durchgangsbohrungen im Regelkörper sowie im Anker auf, so dass ein Druckausgleich zwischen der dem Ventilsitz zugewandten Seite des Regelkörpers und der dem Ventilsitz abgewandten Seite der Einheit aus Regelkörper und Anker erreicht wird. Auf diese Weise wird ein ungewolltes Öffnen des Ventils im Falle eines erhöhten Totaldrucks im Einlassstutzen der Ventilvorrichtung verhindert und eine Unempfindlichkeit bei Pulsationen erreicht. Die Verbindung des Ankers mit dem Regelkörper ist jedoch recht aufwendig herzustellen, da der metallische Anker zur Herstellung des Kugelkopfes und zur Herstellung der Durchgangsbohrungen zunächst ausführlich mechanisch bearbeitet werden muss. Auch weist dieser ein hohes Gewicht im Vergleich zu Kunststoffteilen auf, was auch ein höheres Trägheitsmoment bedeutet, was zu größeren notwendigen Stellkräften führt.

Aus der EP 3 263 962 A1 ist eine Elektromagnetventil mit einer Ventileinheit bekannt, die ein Koppelglied aufweist, welches sich durch eine Öffnung einer Ankerplatte erstreckt und durch Umformen an der Ankerplatte befestigt wird. Zwischen dem Regelkörper der Ventileinheit und der Ankerplatte sind mehrere zusätzliche Elemente angeordnet.

Aus der EP 1 717 501 A1 ist ein Elektromagnetventil mit einer Ventileinheit bekannt, die gegen den Boden eines topfförmigen Ankers anliegt und deren entgegengesetztes Ende an der entgegengesetzten Seite des Bodens aufliegt und dort eine Erweiterung aufweist.

Des Weiteren offenbart die EP 3 372 809 A1 ein Schieberventil, dessen Ventileinheit einen Koppelabschnitt mit einem Außengewinde aufweist, über welches das Ventilglied mit einem Anker verbunden wird, der eine entsprechendes Innengewinde aufweist. Ein ähnliches Elektromagnetventil ist aus US 5,961,052 A bekannt.

Zusätzlich ist aus der GB 2 334 552 A ein Elektromagnetventil bekannt, dessen Ventilglied unter Zwischenlage einer Anschlagplatte über eine Schraube am Anker fixiert wird.

Entsprechend besteht der Nachteil, dass die bekannten Elektromagnetventile insbesondere im Bereich der Bewegungseinheit bestehend aus dem Anker und dem Regelkörper zu schwer sind und in ihrer Herstellung zu teuer sind, insbesondere wenn ein Druckausgleich an der Bewegungseinheit vorgesehen werden soll.

Somit stellt sich die Aufgabe, ein als Kühlmittelventil geeignetes Elektromagnetventil sowie ein Verfahren zur Herstellung eines Elektromagnetventils beziehungsweise der Bewegungseinheit des Elektromagnetventils zur Verfügung zu stellen, mit dem die Kosten zur Herstellung und das Gewicht des Ventils gesenkt werden können und welches auch einen Druckausgleich über die Bewegungseinheit aufweist, um die Stellzeiten und notwendigen Stellkräfte verringern zu können.

Diese Aufgabe wird durch ein Elektromagnetventil für ein Kraftfahrzeug mit den Merkmalen des Hauptanspruchs 1 sowie ein Verfahren zur Herstellung einer Bewegungseinheit aus einem Anker und einer Ventileinheit für ein derartiges Elektromagnetventil mit den Merkmalen des Hauptanspruchs 8 gelöst.

Dadurch, dass die einstückige Ventileinheit eine axiale Auflagefläche aufweist, gegen die der Anker mit seinem ersten axialen Ende aufliegt, wobei am zweiten axialen Ende des Ankers ein separates Befestigungselement aufliegt, welches mit dem Koppelglied der Ventileinheit fest verbunden ist, wird der Anker zwischen dem Befestigungselement und der axialen Auflagefläche der Ventileinheit eingeklemmt, so dass ein zwangsweises Mitführen der Ventileinheit mit dem Anker bei Bestromung der Spule des Aktors sichergestellt wird. Eine relative Bewegung des Ankers zum Regelkörper wird entsprechend ausgeschlossen. Der Anker kann entsprechend aus einem einfach geformten und somit kostengünstig herstellbaren Metallteil hergestellt werden, da er eine vollständig rotationssymmetrische etwa hohlzylindrische Form aufweist. Der Regelkörper kann kostengünstig aus einem Kunststoff hergestellt werden und weist entsprechend ein geringes Gewicht auf. So kann das Gesamtgewicht der Bewegungseinheit bestehend aus dem Anker und der Ventileinheit reduziert werden, wodurch auch die Stellkräfte verringert werden können.

Das Befestigungselement ist als ein Stift mit einem Kopf ausgebildet, der direkt oder unter Zwischenlage eines Ringes gegen das zweite axiale Ende des Ankers anliegt und somit eine zweite Auflagefläche am Anker bildet. Somit wird der Anker von beiden axialen Seiten eingeklemmt, wobei die Einzelteile mit sehr großen Toleranzen hergestellt werden können und einfach zu montieren sind.

Besonders einfach wird die Montage dadurch, dass der Stift in ein Sackloch des Koppelgliedes ragt, da dies als Vorfixierung genutzt werden kann, so dass ein seitliches Verschieben zwischen dem Stift und dem Koppelglied ausgeschlossen werden kann. So werden Montagefehler vermieden.

Die Ventileinheit und der Stift bestehen aus Kunststoff. Der Stift ist durch Schweißen, insbesondere durch Ultraschallschweißen, mit dem Koppelglied verbunden. Ein solches Schweißen sorgt für eine nicht lösbare stoffschlüssige Verbindung und sichert so die starre Verbindung der Ventileinheit mit dem Anker.

Bezüglich des Verfahrens wird die Aufgabe dadurch gelöst, dass ein Koppelglied der Ventileinheit in eine Durchgangsbohrung des Ankers eingeschoben wird, bis der Anker mit einem ersten axialen Ende auf einer Auflagefläche der Ventileinheit aufliegt, anschließend von einer zu einem Regelkörper der Ventileinheit entgegengesetzten Seite des Ankers in den Anker und ein Sackloch des im Anker angeordneten Koppelgliedes ein Befestigungselement eingesteckt wird, daraufhin das Befestigungselement in Richtung eines entgegengesetzten zweiten axialen Endes des Ankers belastet wird, so dass der Anker gegen die Auflagefläche der Ventileinheit gepresst wird, und abschließend das Befestigungselement am Koppelglied der Ventileinheit durch Schweißen in dieser Position befestigt wird. Auf diese Weise wird ein fester Sitz des Ankers zwischen dem Befestigungselement und der Auflagefläche an der Ventileinheit und damit die spielfreie Bewegungskopplung zwischen dem Anker und der Ventileinheit sichergestellt. Die Herstellung der Verbindung ist dabei einfach und verhindert ein ungewolltes Lösen der Ventileinheit vom Anker auch bei auftretenden Schwingungen oder Pulsationen durch die stoffschlüssige Verbindung des Befestigungselementes am Koppelglied zuverlässig. Die Bewegungseinheit wird auf diese Weise kostengünstig hergestellt.

Des Weiteren ist vorzugsweise zwischen dem Koppelglied und dem Anker ein Spalt ausgebildet und ist am Kopf des Stiftes oder dem zwischen Kopf und Anker angeordneten Ring zumindest eine Ausnehmung ausgebildet, über die der Spalt mit einem Raum stetig fluidisch verbunden ist, der an der zum Regelkörper entgegengesetzten axialen Seite des Ankers ausgebildet ist. Somit kann Fluid für einen Druckausgleich aus dem Spalt über die mindestens eine Ausnehmung an die Rückseite des Ankers gelangen. Der Spalt und auch die Größe der Ausnehmungen sind dabei je nach Zähigkeit des geregelten Fluids anzupassen, wobei die Bewegung der Bewegungseinheit möglichst nicht durch die erzwungene Bewegung des Fluids bei Betätigung des Ankers gebremst werden sollte. Entsprechend können sehr schnelle Stellzeiten bei geringen Stellkräften realisiert werden.

In einer weiterführenden Ausbildung weist die axiale Auflagefläche an der Ventileinheit zumindest eine Ausnehmung auf, über die der Spalt mit einem Raum fluidisch verbunden ist, der axial zwischen dem Anker und dem Regelkörper ausgebildet ist. Somit kann Fluid zu den beiden entgegengesetzten Seiten des Ankers strömen, ohne dabei durch den sehr engen Spalt zwischen dem Anker und der Führungshülse fließen zu müssen, der, um ein Kippen des Ankers zu vermieden, sehr klein ausgeführt werden muss und somit keinen ausreichend schnellen Fluidstrom zulässt. Der Anker ist somit druckausgeglichen.

In einer bevorzugten Ausführungsform weist die axiale Auflagefläche an der Ventileinheit drei Ausnehmungen auf, die um 120° zueinander versetzt angeordnet sind, wodurch einerseits eine feste Auflage des Ankers auf der Ventileinheit sichergestellt wird und anderseits auch eine gleichmäßige Durchströmung des Spaltes zwischen dem Anker und der Ventileinheit mit einem ausreichenden zur Verfügung stehenden Durchströmungsquerschnitt sichergestellt wird.

Des Weiteren ist vorteilhafterweise der Raum zwischen dem Anker und dem Regelkörper über Durchgangsöffnungen im Regelkörper stetig fluidisch mit dem Einlass verbunden. Auf diese Weise wird ein vollständiger Druck- und Kraftausgleich bezüglich der hydraulischen Kräfte über die gesamte Bewegungseinheit sichergestellt, da an der gesamten Einheit der Einlassdruck herrscht.

Auch ist es vorteilhaft, wenn im Aktor eine Feder angeordnet ist, über die der Anker mit der Ventileinheit in Richtung des Ventilsitzes belastet ist, wobei ein erstes axiales Ende der Feder gegen den Kopf des Stiftes oder den Ring zwischen dem Anker und dem Kopf des Stiftes aufliegt. Durch die Feder wird das Ventil in eine Sicherheitsstellung bei Ausfall des Aktors verschoben, so dass beispielsweise bei Verwendung als Kühlmittelventil ein Kühlmittelfluss sichergestellt wird. Der Stift dient dabei als Auflage für die Feder, so dass ein Verschleiß des Ankers nicht zu befürchten ist.

In einer weiterführenden Ausführung ist ein axialer Abschnitt des Kopfes des Stiftes von der Feder radial umgeben, wodurch der Kopf als Führungsabschnitt für die Feder wirken kann, wodurch ein Verschieben oder ein Wegknicken der Feder zuverlässig vermieden wird.

Es wird somit ein Elektromagnetventil geschaffen, dass bezüglich der hydraulischen Kräfte in allen Stellungen ausgeglichen ist und kurze Stellzeiten aufweist. Dies wird noch verstärkt durch das geringe Gewicht der Bewegungseinheit, die besonders kostengünstig und einfach hergestellt werden kann, da viele leichte Kunststoffteile verwendet werden können.

Ein Ausführungsbeispiel eines erfindungsgemäßen Elektromagnetventils ist in den Figuren dargestellt und wird nachfolgend anhand einer Ausführung als Kühlmittelventil beschrieben.
Figur 1 zeigt eine Seitenansicht eines erfindungsgemäßen Elektromagnetventils in geschnittener Darstellung.
Figur 2 zeigt eine perspektivische Ansicht eines Ausschnitts der Bewegungseinheit des Elektromagnetventils aus Figur 1.

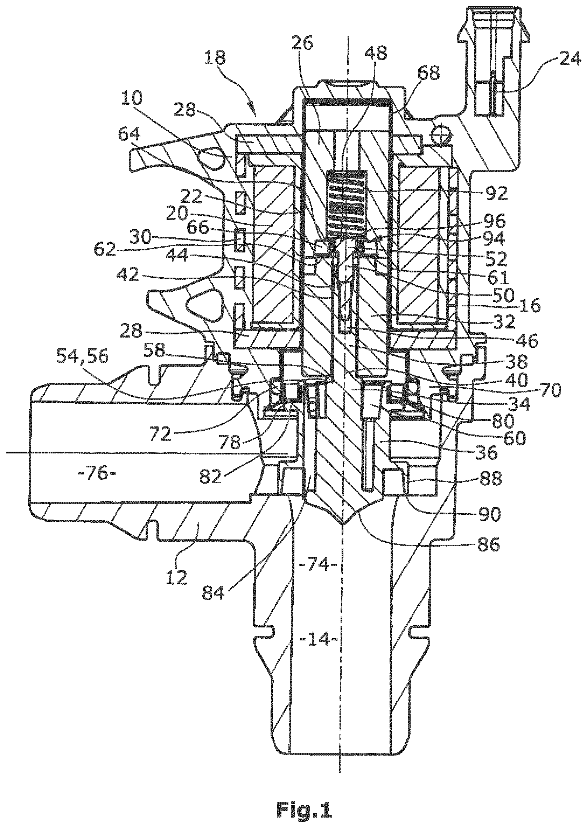

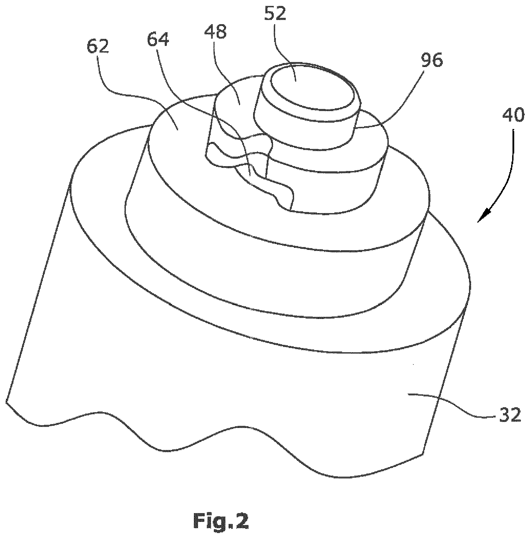

Das in Figur 1 dargestellte Kühlmittelventil besteht aus einem Gehäuse 10, welches zweiteilig ausgeführt ist und ein Strömungsgehäuse 12 mit einem darin ausgebildeten Strömungskanal 14 und ein am Strömungsgehäuse 12 befestigtes Aktorgehäuse 16 aufweist, in dem ein elektromagnetischer Aktor 18 angeordnet ist.

Der elektromagnetische Aktor 18 weist einen elektromagnetischen Kreis auf, der aus einer Spule 20, die auf einen Spulenträger 22 gewickelt ist und über einen Stecker 24 bestrombar ist, sowie einem magnetisierbaren Kern 26, Rückschusselementen 28, einem Joch 30 und einem beweglichen Anker 32 besteht. Bei Bestromung der Spule 20 wird der Anker 32 in bekannter Weise durch die entstehenden magnetischen Kräfte in Richtung des Kerns 26 bewegt.

Der Anker 32 bildet mit einer Ventileinheit 34, die aus Kunststoff hergestellt ist und aus einem Regelkörper 36 und einem Koppelglied 38 besteht, eine Bewegungseinheit 40. Hierzu weist der Anker 32 eine axiale Durchgangsbohrung 42 auf, in die das Koppelglied 38 ragt, welches als zylindrischer Vorsprung des Regelkörpers 36 ausgebildet ist und eine geringere axiale Länge als die Durchgangsbohrung 42 des Ankers 32 sowie einen geringfügig kleineren Durchmesser aufweist, so dass ein Spalt 44 zwischen dem Koppelglied 38 und dem Anker 32 in der Durchgangsbohrung 42 gebildet wird. Am in die Durchgangsbohrung 42 ragenden axialen Ende des Koppelgliedes 38 ist ein sich axial erstreckendes Sackloch 46 ausgebildet, in welches erfindungsgemäß ein Befestigungselement 48 gesteckt wird, welches am Koppelglied 38 befestigt wird.

Das Befestigungselement 48 besteht in vorliegendem Ausführungsbeispiel aus einem Stift 50 aus Kunststoff, der einen Kopf 52 mit vergrößertem Durchmesser aufweist. Zur Befestigung der Ventileinheit 34 am Anker 32 wird zunächst das Koppelglied 38 in die Durchgangsbohrung 42 des Ankers 32 geschoben bis das zum Regelkörper 36 weisende erste axiale Ende 54 des Ankers 32 gegen eine axiale Auflagefläche 56 der Ventileinheit 34 anliegt, die als Absatz des Koppelgliedes 38 ausgeführt ist, so dass sich das Koppelglied 38 von dieser Auflagefläche 56 aus mit vergrößertem Durchmesser in Richtung des Regelkörpers 36 erstreckt.

Die Auflagefläche 56 weist drei Ausnehmungen 58 auf, die um 120° zueinander versetzt angeordnet sind, so dass eine fluidische Verbindung zwischen dem Spalt 44 und einem Raum 60 vorhanden ist, der zwischen dem Anker 32 und dem Regelkörper 36 angeordnet ist. Selbstverständlich können auch mehr oder weniger Ausnehmungen 58 vorgesehen werden, wobei je nach Zähigkeit des Fluids entsprechende Durchströmungsquerschnitte vorzusehen sind, um ein schnelles Durchströmen zu ermöglichen.

Nachdem die Ventileinheit mit ihrem Koppelglied 38 in die Durchgangsbohrung 42 und gegen die Auflagefläche 56 geschoben ist, wird der Stift 50 mit seinem Kopf 52 oder mit einem den Stift 50 umgebenden Ring 61, der axial gegen den Kopf 52 anliegt, gegen das zweite axiale Ende 62 des Ankers 32 gepresst. Dabei taucht der Stift 50 in das Sackloch 46 des Koppelgliedes 38 ein. In dieser Position ist der Anker 32 zwischen dem Kopf 52 des Stiftes 50 und der Auflagefläche 56 axial eingeklemmt, so dass keine axiale Relativbewegung des Ankers 32 zur Ventileinheit 34 möglich ist. In dieser Position wird der Stift 50 durch Ultraschallschweißen am Koppelglied 38 verschweißt und somit befestigt.

Der Kopf 52 des Stiftes 50 oder der zwischenliegende Ring 61 weist zumindest eine weitere Ausnehmung 64 auf, über die ein Raum 66 an der zum Regelkörper 36 entgegengesetzten Seite des Ankers 32 und zwar zwischen dem Anker 32 und einer Hülse 68, in der der Anker 32 geführt ist, mit dem Spalt 44 zwischen dem Anker 32 und dem Koppelglied 38 stetig fluidisch verbunden ist.

Die Hülse 68, in der der Anker 32 geführt ist, nimmt auch den Kern 26 auf und erstreckt sich radial im Innern des Aktors 18 bis in einen Gehäusevorsprung 70 des Aktorgehäuses 16, der sich axial in das Strömungsgehäuse 12 erstreckt. Zwischen diesem Gehäusevorsprung 70 und einem Endbereich der Hülse 68 ist ein O-Ring 72 angeordnet, über den der radial äußere Bereich der Hülse 68 gegenüber dem geförderten Kühlmittel abgedichtet wird, so dass kein Kühlmittel zur Spule 20 gelangen kann.

Des Weiteren begrenzt die Hülse 68 den Raum 60, der an einer von einem Einlass 74 des Strömungsgehäuses 12 abgewandten Seite des Regelkörpers 36 und axial zwischen dem Regelkörper 36 und dem Anker 32 gebildet wird und der gegenüber einem radialen Auslass 76 des Strömungsgehäuses 12 mittels eines Lippendichtringes 78, dessen geschlossene Seite zum Auslass 76 weist, abgedichtet wird. Der Lippendichtring 78 wird mit dem Regelkörper 36 bewegt und ist über seinen inneren Schenkel in einer Radialnut 80 des Regelkörpers 36 befestigt und liegt mit seinem äußeren Schenkel gegen die Hülse 68 an. Axial liegt der Lippendichtring 78 mit seiner geschlossenen Seite auf einer Auflagefläche 82 des Regelkörpers 36 auf, die als umlaufender radialer Vorsprung am Regelkörper 36 ausgebildet ist.

Der Raum 60 ist über im Regelkörper 36 ausgebildete Durchgangsöffnungen 84, die als axiale Durchgangsbohrungen ausgeführt sind, kontinuierlich mit dem Einlass 74 verbunden. Diese Verbindung des Einlasses 74 mit dem Raum 60 erfolgt nicht vollständig axial über die Durchgangsöffnungen 84, da die Enden der Durchgangsöffnungen 84 größtenteils durch einen Partikelschutzschirm 86 verdeckt sind, der zentral am zum Einlass 74 weisenden Ende des Regelkörpers 36 ausgebildet ist. Die Einströmung in die Durchgangsöffnungen 84 erfolgt entsprechend zunächst zwischen dem Partikelschutzschirm 86 und einem sich axial erstreckenden ringförmigen Vorsprung 88, mit dem der Regelkörper 36 auf einen Ventilsitz 90 aufsetzbar ist. Von hier aus erfolgt zunächst eine Umlenkung der Strömung nach radial innen in die Durchgangsöffnungen 84 und von hier aus axial in den Raum 60.

Zusätzlich besteht über die Ausnehmungen 58 an der Auflagefläche 56 der Ventileinheit 34 eine Verbindung zum Spalt 44 zwischen dem Anker 32 und dem Koppelglied 38 sowie über die Ausnehmungen 64 am Kopf 52 des Stiftes 50 eine stetige fluidische Verbindung zu dem Raum 66, der durch die Hülse 68 und den Anker 32 an der zum Regelkörper 36 entgegengesetzten Seite des Ankers 32 ausgebildet ist. Die Bewegungseinheit 40 ist somit druckausgeglichen. Da zusätzlich die Gesamtfläche des Regelkörpers 36 radial innerhalb des Ventilsitzes 90 am Einlass 74 gleich der Summe der Flächen am Anker 32 und am Regelkörper 36, auf die der Fluiddruck in entgegengesetzter Richtung wirkt, gleich sind, besteht auch eine hydraulische Kraftausgeglichenheit, die zu einer leichten Aktuierbarkeit des Elektromagnetventils führt. Entsprechend ist die Bewegungseinheit 40 durch die vorhandenen Verbindungen zwischen den Front- und Rückseiten der Ventileinheit 34 und des Ankers 32 in allen Positionen bezüglich der hydraulischen Kräfte ausgeglichen, da das Fluid über die Ausnehmungen 58, 64, die Durchgangsöffnungen 84 und den Spalt 44 jeweils schnell vom Einlass 74 zur gegenüberliegenden Seite der Bewegungseinheit 40 gelangen kann, was in einer ausreichenden Geschwindigkeit über den Spalt zwischen der Hülse 68 und dem Anker 32 nicht möglich wäre, da dieser mit einem engen Spiel ausgeführt werden muss, um ein Kippen des Ankers 32 zu verhindern.

Die einzige Kraft die der Aktor 18 beim Öffnen oder Schließen des Ventils überwinden muss, ist daher die Kraft einer Feder 92, über welche die Bewegungseinheit 35 in einer vom Kern 26 weg weisenden Richtung belastet wird, wodurch der Regelkörper 36 auf den Ventilsitz 90 gedrückt wird, der im Strömungsgehäuse 12 zwischen dem axialen Einlass 74 und dem radialen Auslass 76 ausgebildet ist. Bei Bestromung der Spule 20 übersteigt die magnetische Kraft die Kraft der Feder 92, wodurch der Regelkörper 36 vom Ventilsitz 90 abgehoben wird und somit den Durchströmungsquerschnitt freigibt. Bei Ausfall des Aktors 18 wird somit eine geöffnete Sicherheitsstellung des Elektromagnetventils hergestellt.

Die Feder 92 stützt sich mit ihrem ersten axialen Ende 94 gegen einen Absatz des Kopfes 52 des Stiftes 50 ab, so dass ein axialer Abschnitt 96 des Kopfes 52 mit kleinerem Durchmesser in das Innere der Feder 92 ragt, die sich mit ihrem entgegengesetzten axialen Ende am Kern 26 abstützt. So bildet der Kopf 52 einerseits eine Auflagefläche für die Feder 92 und andererseits eine Führung im unteren Bereich, wodurch ein Verschieben der Feder 92 ausgeschlossen wird.

Das erfindungsgemäße Elektromagnetventil stellt entsprechend eine schnelle Verstellbarkeit mit geringen Stellkräften sicher und ist andererseits sehr einfach zu fertigen, da die Einzelteile mit großen Toleranzen herstellbar sind und viele Kunststoffteile verwendet werden können, die durch das Verfahren des Spritzgießens auch mit komplexen Formen einfach und kostengünstig hergestellt werden können. Zusätzlich weist das Elektromagnetventil durch den hohen Anteil an Kunststoff ein geringes Gewicht auf. Auch ist der Anker aufgrund der einfachen Form mit wenig Aufwand herstellbar, wodurch ebenfalls Kosten eingespart werden können.

Es sollte deutlich sein, dass der Schutzbereich des vorliegenden Hauptanspruchs nicht auf das beschriebene Ausführungsbeispiel beschränkt ist. So können die Auflageflächen und Ausnehmungen am Kopf oder am Koppelglied ebenso wie das Koppelglied selbst anders ausgeformt oder in ihrer Anzahl variiert werden. Auch kann ein separater Ring zwischen dem Kopf und dem Anker verwendet werden, an dem dann auch die Ausnehmung auszubilden ist. Weitere konstruktive Änderungen sind selbstverständlich ebenfalls denkbar.

## Patentansprüche

1. Elektromagnetventil für ein Kraftfahrzeug mit
einem Gehäuse (10), das einen Einlass (74) und einen Auslass (76) aufweist,
einem Durchströmungsquerschnitt, der zwischen dem Einlass (74) und dem Auslass (76) ausgebildet ist und von einem Ventilsitz (90) umgeben ist,
einer einstückigen Ventileinheit (34) mit einem Koppelglied (38) und einem Regelkörper (36), der auf den Ventilsitz (90) absetzbar und vom Ventilsitz (90) abhebbar ist,
einem elektromagnetischen Aktor (18) mit einem Anker (32), der eine axiale Durchgangsbohrung (42) aufweist, in die das Koppelglied (38) der Ventileinheit (34) ragt, die mit dem Anker (32) bewegbar ist,
wobei
die einstückige Ventileinheit (34) eine axiale Auflagefläche (56) aufweist, gegen die der Anker (32) mit seinem ersten axialen Ende (54) aufliegt, wobei am zweiten axialen Ende (62) des Ankers (32) ein separates Befestigungselement (48) aufliegt, welches mit dem Koppelglied (38) der Ventileinheit (34) fest verbunden ist,
das Befestigungselement (48) ein Stift (50) mit einem Kopf (52) ist, der direkt oder unter Zwischenlage eines Ringes (61) gegen das zweite axiale Ende (62) des Ankers (32) anliegt,
der Stift (50) in ein Sackloch (46) des Koppelgliedes (38) ragt, **dadurch gekennzeichnet, dass**
die Ventileinheit (34) und der Stift (50) aus Kunststoff sind und durch Schweißen, insbesondere durch Ultraschallschweißen der Stift (50) mit dem Koppelglied (38) verbunden ist.

2. Elektromagnetventil für ein Kraftfahrzeug nach Anspruch 1,
**dadurch gekennzeichnet, dass**
zwischen dem Koppelglied (38) und dem Anker (32) ein Spalt (44) ausgebildet ist und am Kopf (52) des Stiftes (50) oder dem zwischen Kopf (52) und Anker (32) angeordneten Ring (61) zumindest eine Ausnehmung (64) ausgebildet ist, über die der Spalt (44) mit einem Raum (66) stetig fluidisch verbunden ist, der an dem zum Regelkörper (36) entgegengesetzten, zweiten axialen Ende (62) des Ankers (32) ausgebildet ist.

3. Elektromagnetventil für ein Kraftfahrzeug nach Anspruch 2,
**dadurch gekennzeichnet, dass**
die axiale Auflagefläche (56) an der Ventileinheit (34) zumindest eine Ausnehmung (58) aufweist, über die der Spalt (44) mit einem Raum (60) fluidisch verbunden ist, der axial zwischen dem Anker (32) und dem Regelkörper (36) ausgebildet ist.

4. Elektromagnetventil für ein Kraftfahrzeug nach Anspruch 3,
**dadurch gekennzeichnet, dass**
die axiale Auflagefläche (56) an der Ventileinheit (34) drei Ausnehmungen (58) aufweist, die um 120° zueinander versetzt angeordnet sind.

5. Elektromagnetventil für ein Kraftfahrzeug nach Anspruch 3 oder 4,
**dadurch gekennzeichnet, dass**
der Raum (60) zwischen dem Anker (32) und dem Regelkörper (36) über Durchgangsöffnungen (84) im Regelkörper (36) stetig fluidisch mit dem Einlass (74) verbunden ist.

6. Elektromagnetventil für ein Kraftfahrzeug nach einem der vorangegangenen Ansprüche,
**dadurch gekennzeichnet, dass**
im Aktor (18) eine Feder (92) angeordnet ist, über die der Anker (32) mit der Ventileinheit (34) in Richtung des Ventilsitzes (90) belastet ist, wobei ein erstes axiales Ende (94) der Feder (92) gegen den Kopf (52) des Stiftes (50) oder den Ring (61) zwischen dem Anker (32) und dem Kopf (52) des Stiftes (50) aufliegt.

7. Elektromagnetventil für ein Kraftfahrzeug nach Anspruch 6,
**dadurch gekennzeichnet, dass**
ein axialer Abschnitt (96) des Kopfes (52) des Stiftes (50) von der Feder (92) radial umgeben ist.

8. Verfahren zur Herstellung einer Bewegungseinheit (40) aus einem Anker (32) und einer Ventileinheit (34) für ein Elektromagnetventil, bei dem ein Koppelglied (38) der Ventileinheit (34) in eine Durchgangsbohrung (42) des Ankers (32) eingeschoben wird, bis der Anker (32) mit einem ersten axialen Ende (54) auf einer Auflagefläche (56) der Ventileinheit (34) aufliegt,
anschließend von einer zu einem Regelkörper (36) der Ventileinheit (34) entgegengesetzten Seite des Ankers (32) in den Anker (32) und ein Sackloch (46) des im Anker (32) angeordneten Koppelgliedes (38) ein Befestigungselement (48) eingesteckt wird,
daraufhin das Befestigungselement (48) in Richtung eines entgegengesetzten zweiten axialen Endes (62) des Ankers (32) belastet wird, so dass der Anker (32) gegen die Auflagefläche (56) der Ventileinheit (34) gepresst wird,
und abschließend das Befestigungselement (48) am Koppelglied (38) der Ventileinheit (34) durch Schweißen in dieser Position befestigt wird.

## Claims

1. A solenoid valve for a motor vehicle with
a housing (10), which has an inlet (74) and an outlet (76),
a through-flow cross-section, which is formed between the inlet (74) and the outlet (76) and is surrounded by a valve seat (90),
a one-piece valve unit (34) with a coupling member (38) and a control body (36), which is able to be placed onto the valve seat (90) and is able to be lifted from the valve seat (90),
an electromagnetic actuator (18) with an armature (32), which has an axial through-bore (42), into which the coupling member (38) of the valve unit (34) projects, which is movable with the armature (32),
wherein
the one-piece valve unit (34) has an axial contact surface (56), against which the armature (32) rests with its first axial end (54), wherein at the second axial end (62) of the armature (32) a separate fastening element (48) rests, which is securely connected with the coupling member (38) of the valve unit (34),
the fastening element (48) is a pin (50) with a head (52), which lies directly or with interposition of a ring (61) against the second axial end (62) of the armature (32), the pin (50) projects into a blind hole (46) of the coupling member (38),
**characterized in that**
the valve unit (34) and the pin (50) are made of plastic and the pin (50) is connected to the coupling member (38) by welding, in particular by ultrasonic welding.

2. The solenoid valve for a motor vehicle according to Claim 1,
**characterized in that**
a gap (44) is formed between the coupling member (38) and the armature (32), and at the head (52) of the pin (50) or the ring (61) arranged between the head (52) and the armature (32) at least one recess (64) is formed, via which the gap (44) is continually connected fluidically with a space (66) which is formed at the second axial end (62) of the armature (32) opposed to the control body (36).

3. The solenoid valve for a motor vehicle according to Claim 2,
**characterized in that**
the axial contact surface (56) on the valve unit (34) has at least one recess (58) via which the gap (44) is fluidically connected with a space (60), which is formed axially between the armature (32) and the control body (36).

4. The solenoid valve for a motor vehicle according to Claim 3,
**characterized in that**
the axis contact surface (56) on the valve unit (34) has three recesses (58), which are arranged offset by 120° with respect to one another.

5. The solenoid valve for a motor vehicle according to Claim 3 or 4,
**characterized in that**
the space (60) between the armature (32) and the control body (36) is continually connected fluidically with the inlet (74) via through-openings (84) in the control body (36).

6. The solenoid valve for a motor vehicle according to one of the preceding claims,
**characterized in that**
in the actuator (18) a spring (92) is arranged, via which the armature (32) is loaded with the valve unit (34) in the direction of the valve seat (90), wherein a first axial end (94) of the spring (92) rests against the head (52) of the pin (50) or against the ring (61) between the armature (32) and the head (52) of the pin (50).

7. The solenoid valve for a motor vehicle according to Claim 6,
**characterized in that**
an axial portion (96) of the head (52) of the pin (50) is radially surrounded by the spring (92).

8. A method for the production of a movement unit (40) of an armature (32) and of a valve unit (34) for a solenoid valve, in which a coupling member (38) of the valve unit (34) is inserted into a through-bore (42) of the armature (32) until the armature (32) rests with a first axial end (54) on a contact surface (56) of the valve unit (34),
subsequently, from a side of the armature (32) opposed to a control body (36) of the valve unit (34), a fastening element (48) is inserted into the armature (32) and a blind hole (46) of the coupling member (38) arranged in the armature (32),
then the fastening element (48) is loaded in the direction of an opposed second axial end (62) of the armature (32), so that the armature (32) is pressed against the contact surface (56) of the valve unit (34),
and finally the fastening element (48) is fastened in this position on the coupling member (38) of the valve unit (34) by welding.

## Revendications

1. Électrovanne pour un véhicule à moteur avec
un boîtier (10), qui présente une entrée (74) et une sortie (76),
une section transversale d'écoulement qui est réalisée entre l'entrée (74) et la sortie (76) et est entourée d'un siège de vanne (90),
une unité de vanne (34) monobloc avec un organe de couplage (38) et un corps de régulation (36) qui peut être déposé sur le siège de vanne (90) et peut être soulevé du siège de vanne (90),
un actionneur (18) électromagnétique avec un induit (32) qui présente un trou débouchant (42) axial dans lequel fait saillie l'organe de couplage (38) de l'unité de vanne (34) qui est mobile avec l'induit (32), dans laquelle
l'unité de vanne (34) monobloc présente une surface d'appui axiale (56) contre laquelle repose l'induit (32) par sa première extrémité axiale (54), dans laquelle un élément de fixation (48) séparé, lequel est solidaire de l'organe de couplage (38) de l'unité de vanne (34), repose sur la seconde extrémité axiale (62) de l'induit (32),
l'élément de fixation (48) est une goupille (50) avec une tête (52) qui est en appui contre la seconde extrémité axiale (62) de l'induit (32) directement ou avec interposition d'une bague (61),
la goupille (50) fait saillie dans un trou borgne (46) de l'organe de couplage (38), **caractérisée en ce que**
l'unité de vanne (34) et la goupille (50) sont en matière plastique et la goupille (50) est reliée à l'organe de couplage (38) par soudage, en particulier par soudage par ultrasons.

2. Électrovanne pour un véhicule à moteur selon la revendication 1,
**caractérisée en ce que**
un espace (44) est réalisé entre l'organe de couplage (38) et l'induit (32) et au moins un évidement (64) est réalisé sur la tête (52) de la goupille (50) ou sur la bague (61) disposée entre la tête (52) et l'induit (32), par l'intermédiaire duquel l'espace (44) est relié en permanence de manière fluidique à un espace (66) qui est réalisé sur la seconde extrémité axiale (62) de l'induit (32) opposée au corps de régulation (36).

3. Électrovanne pour un véhicule à moteur selon la revendication 2,
**caractérisée en ce que**
la surface d'appui axiale (56) présente, sur l'unité de vanne (34), au moins un évidement (58) par l'intermédiaire duquel l'espace (44) est relié fluidiquement à un espace (60) qui est réalisé axialement entre l'induit (32) et le corps de régulation (36).

4. Électrovanne pour un véhicule à moteur selon la revendication 3,
**caractérisée en ce que**
la surface d'appui axiale (56) présente, sur l'unité de vanne (34), trois évidements (58) qui sont disposés décalés de 120° les uns par rapport aux autres.

5. Électrovanne pour un véhicule à moteur selon la revendication 3 ou 4,
**caractérisée en ce que**
l'espace (60) entre l'induit (32) et le corps de régulation (36) est relié en permanence de manière fluidique à l'entrée (74) par le biais d'ouvertures de passage (84) dans le corps de régulation (36).

6. Électrovanne pour un véhicule à moteur selon l'une quelconque des revendications précédentes,
**caractérisée en ce que**
un ressort (92), par l'intermédiaire duquel l'induit (32) est sollicité avec l'unité de vanne (34) en direction du siège de vanne (90), est disposé dans l'actionneur (18), dans laquelle une première extrémité axiale (94) du ressort (92) repose contre la tête (52) de la goupille (50) ou la bague (61) entre l'induit (32) et la tête (52) de la goupille (50).

7. Électrovanne pour un véhicule à moteur selon la revendication 6,
**caractérisée en ce que**
une partie axiale (96) de la tête (52) de la goupille (50) est entourée radialement par le ressort (92).

8. Procédé de fabrication d'une unité de mouvement (40) composée d'un induit (32) et d'une unité de vanne (34) pour une électrovanne, selon lequel un organe de couplage (38) de l'unité de vanne (34) est inséré dans un trou débouchant (42) de l'induit (32) jusqu'à ce que l'induit (32) repose, par une première extrémité axiale (54), sur une surface d'appui (56) de l'unité de vanne (34),
un élément de fixation (48) est ensuite introduit dans l'induit (32) par un côté de l'induit (32) opposé à un corps de régulation (36) de l'unité de vanne (34) et un trou borgne (46) de l'organe de couplage (38) disposé dans l'induit (32),
après cela l'élément de fixation (48) est sollicité en direction d'une seconde extrémité axiale (62) opposée de l'induit (32), de sorte que l'induit (32) est pressé contre la surface d'appui (56) de l'unité de vanne (34),
et enfin l'élément de fixation (48) est fixé sur l'organe de couplage (38) de l'unité de vanne (34) par soudage dans cette position.
